(19) **Europäisches Patentamt / European Patent Office / Office européen des brevets**

(11) **EP 4 769 202 A1**

(12) **EUROPEAN PATENT APPLICATION**
published in accordance with Art. 153(4) EPC

(43) Date of publication:
01.07.2026 Bulletin 2026/27

(21) Application number: 25849212.3

(22) Date of filing: 13.06.2025

(51) International Patent Classification (IPC):
**G06F 30/3312** (2020.01)

(86) International application number:
**PCT/CN2025/100803**

(87) International publication number:
**WO 2026/097864 (15.05.2026 Gazette 2026/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.11.2024 CN 202411615169**

(71) Applicant: **Hygon Information Technology Co., Ltd.**
**Tianjin 300392 (CN)**

(72) Inventor: **XUE, Xiaodi**
**Tianjin 300392 (CN)**

(74) Representative: **Bergenstråhle & Partners AB**
**P.O. Box 17704**
**118 93 Stockholm (SE)**

(54) **TIMING SIGN OFF METHOD AND APPARATUS, ELECTRONIC DEVICE, AND STORAGE MEDIUM**

(57) Embodiments of the present disclosure disclose a timing sign-off method and apparatus, an electronic device, and a storage medium, which relate to the technical field of integrated circuits and can effectively reduce the pessimism and the complexity of timing sign-off for 3D integrated chips. The method includes: obtaining a first standard cell library corresponding to each of dies in a chip to be signed off, in which each of standard cells in the first standard cell library owns 3D process corner timing parameters, which comprise an average delay of each of the standard cells at a 3D process corner and a delay standard deviation of the standard cell at the 3D process corner, and in which the chip to be signed off is obtained by 3D integration of at least two dies; and performing timing sign-off for the chip to be signed off using the first standard cell library. The present disclosure is applicable to timing sign-off for chips.

Obtaining a first standard cell library corresponding to each of dies in a chip to be signed off, in which each of standard cells in the first standard cell library owns 3D process corner timing parameters, which include an average delay of each of the standard cells under a 3D process corner and a delay standard deviation of the standard cell under the 3D process corner, and in which the chip to be signed off is obtained by 3D integration of at least two dies — S11

Performing timing sign-off for the chip to be signed off using the first standard cell library — S12

FIG. 1

EP 4 769 202 A1

**Description**

The present disclosure claims the priority of Chinese patent with an application number of 202411615169.8, a patent title of "timing sign-off method and apparatus, electronic device and storage medium", and filed on November 11, 2024, the entire content of which is incorporated herein by reference.

Technical Field

The present disclosure relates to the field of integrated circuit technology, and in particular to a timing sign-off method and apparatus, electronic device, and storage medium.

Background

Timing sign-off is required before chips are entrusted to a wafer fab for processing. The timing sign-off refers to the inspection of the timing of a chip design to ensure that the chips can work normally at different Process Voltage Temperature (PVT) scenarios.

Due to the process deviations (or variations) during chip production, a certain degree of pessimistic estimation of chip timing is usually required during sign-off. However, an excessively pessimistic estimation may seriously affect the chip performance. In order to avoid the excessively pessimistic estimation of chip timing, the timing sign-off for two-dimensional (2D) chips is generally performed through a combination (i.e., Parametric On-Chip Variations (POCVs)) of global corners (i.e., global standard deviations) and local variations.

However, for three-dimensional (3D) integrated chips, due to the high randomness in the process conditions of various dies, cross-die sign-off using the above method leads to two problems. On one hand, there are many combinations of sign-off corners (or sign-off conditions), which makes timing analysis too complex. On the other hand, as the number of the stacked dies increases, the above sign-off method becomes increasingly pessimistic, resulting in an over design and a loss of product performance.

Summary

In view of this, embodiments of the present disclosure provide a timing sign-off method and apparatus, an electronic device, and a storage medium, which can effectively reduce the pessimism and the complexity of timing sign-off for 3D integrated chips.

In a first aspect, an embodiment of the present disclosure provides a timing sign-off method, including: obtaining a first standard cell library corresponding to each of dies in a chip to be signed off, wherein each of standard cells in the first standard cell library owns 3D process corner timing parameters, the 3D process corner timing parameters include an average delay of each of the standard cells at a 3D process corner and a delay standard deviation of the standard cell at the 3D process corner, and wherein the chip to be signed off is obtained by 3D integration of at least two dies; and performing timing sign-off for the chip to be signed off using the first standard cell library.

In an implementation, before the obtaining a first standard cell library corresponding to each of dies in a chip to be signed off, the method further includes: obtaining a second standard cell library corresponding to each of the dies in the chip to be signed off, wherein each of standard cells in the second standard cell library owns 2D corner timing parameters, the 2D corner timing parameters include an average delay of each of the standard cells under 2D conditions and a local standard deviation of a delay of the standard cell under 2D conditions; determining an average delay of each of the standard cells at the 3D process corner according to the average delay of the standard cell under 2D conditions to obtain a first average delay, and determining a delay standard deviation of each of the standard cells at the 3D process corner according to the local standard deviation of the delay of the standard cell under 2D conditions to obtain a first standard deviation; and configuring each of the first average delays and each of the first standard deviations into the second standard cell library to form the first standard cell library.

In an implementation, the determining an average delay of each of the standard cells at the 3D process corner according to the average delay of the standard cell under 2D conditions to obtain a first average delay includes: determining the average delay of each of the standard cells at the 3D process corner according to an average delay of the standard cell at a typical-typical corner (TT corner) under 2D conditions to obtain the first average delay.

In an implementation, the determining a delay standard deviation of each of the standard cells at the 3D process corner according to the local standard deviation of the delay of the standard cell under 2D conditions to obtain a first standard deviation includes: determining a total standard deviation and a local standard deviation of a delay of each of devices in each of the dies of the chip to be signed off by using a device model provided by a wafer fab or by simulation; determining a standard deviation expansion coefficient of each of the devices according to the total standard deviation and the local standard deviation of the delay of the device; and determining a delay standard deviation of each of the standard cells at the 3D process corner according to the local standard deviation of the delay of the standard cell under 2D conditions and the standard deviation expansion coefficient of the device corresponding to the standard cell, so as to obtain the first standard deviation.

In an implementation, the standard deviation expansion coefficient of each of the devices is equal to a ratio of the total standard deviation of the delay of the device to the local standard deviation of the delay of the device; and the first standard deviation of each of the standard cells is equal to a product of the local standard deviation of the delay of the standard cell under 2D conditions and the standard deviation expansion coefficient of the device corresponding to the standard cell.

In an implementation, the performing timing sign-off for the chip to be signed off using the first standard cell library includes: determining a delay parameter of a first segment of a target path in the chip to be signed off based on the first standard cell library, and determining a delay parameter of a second segment of the target path based on a metal wire delay model (interconnect delay model), wherein the first segment is a portion of the target path located inside each of the dies, and the second segment is a portion of the target path located between adjacent dies; determining a delay parameter of the target path according to the delay parameter of the first segment and the delay parameter of the second segment; and determining whether the target path passes the sign-off depending on whether the delay parameter of the target path falls within a preset parameter range.

In an implementation, the delay parameter of the first segment includes an average delay of the first segment and a delay standard deviation of the first segment; and the delay parameter of the second segment includes an average delay of the second segment and a delay standard deviation of the second segment; the determining a delay parameter of the target path according to the delay parameter of the first segment and the delay parameter of the second segment includes: summing the average delay of each of the first segments and the average delay of each of the second segments to obtain an average delay of the target path; and summing a sum of the squares of the delay standard deviation of each of the first segments and a sum of the squares of the delay standard deviation of each of the second segments, and taking an arithmetic square root of the resulting sum to obtain a delay standard deviation of the target path.

In a second aspect, an embodiment of the present disclosure further provides a timing sign-off apparatus, including: a first obtaining unit configured to obtain a first standard cell library corresponding to each of dies in a chip to be signed off, wherein each of standard cells in the first standard cell library owns 3D process corner timing parameters, the 3D process corner timing parameters include an average delay of each of the standard cells at a 3D process corner and a delay standard deviation of the standard cell at the 3D process corner, and wherein the chip to be signed off is obtained by 3D integration of at least two dies; and a sign-off unit configured to perform timing sign-off for the chip to be signed off using the first standard cell library.

In an implementation, the apparatus further includes: a second obtaining unit configured to, before obtaining a first standard cell library corresponding to each of dies in a chip to be signed off, obtain a second standard cell library corresponding to each of the dies in the chip to be signed off, wherein each of standard cells in the second standard cell library owns 2D corner timing parameters, which include an average delay of each of the standard cells under 2D conditions and a local standard deviation of a delay of the standard cell under 2D conditions; a determination unit configured to determine an average delay of each of the standard cells at the 3D process corner according to the average delay of the standard cell under 2D conditions to obtain a first average delay, and determine a delay standard deviation of each of the standard cells at the 3D process corner according to the local standard deviation of the delay of the standard cell under 2D conditions to obtain a first standard deviation; and a configuration unit configured to configure configures each of the first average delays and each of the first standard deviations into the second standard cell library to form the first standard cell library.

In an implementation, the determination unit includes a first determination module configured to determine the average delay of each of the standard cells at the 3D process corner according to an average delay of the standard cell at a typical-typical corner under 2D conditions 2D corner to obtain the first average delay.

In an implementation, the determination unit includes a second determination module configured to: determine a total standard deviation and a local standard deviation of a delay of each of devices in each of the dies of the chip to be signed off through a device model provided by a wafer fab or through simulation; determine a standard deviation expansion coefficient of each of the devices according to the total standard deviation and the local standard deviation of the delay of the device; and determine a delay standard deviation of each of the standard cells at the 3D process corner according to the local standard deviation of the delay of the standard cell under 2D conditions and the standard deviation expansion coefficient of the device corresponding to the standard cell, so as to obtain the first standard deviation.

In an implementation, the standard deviation expansion coefficient of each of the devices is equal to a ratio of the total standard deviation of the delay of the device to the local standard deviation of the delay of the device; and the first standard deviation of each of the standard cells is equal to a product of the local standard deviation of the delay of the standard cell under 2D conditions and the standard deviation expansion coefficient of the device corresponding to the standard cell.

In an implementation, the sign-off unit includes: a third determination module configured to determine a delay parameter of a first segment of a target path in the chip to be signed off based on the first standard cell library, and determine a delay parameter of a second segment of the target path based on a metal wire delay model, wherein the first segment is a portion of the target path located inside each of the dies, and the second segment is a portion of the target path located between adjacent dies; a fourth determination module configured to determine a delay parameter of the target path according to the delay parameter of the first segment and the delay parameter of the second segment; and a fifth determination module configured to determine whether the target path passes the sign-off depending on whether the delay parameter of the target path falls within a preset parameter range.

In an implementation, the delay parameter of the first segment includes an average delay of the first segment and a delay standard deviation of the first segment; and the delay parameter of the second segment includes an average delay of the second segment and a delay standard deviation of the second segment; the fourth determination module is specifically configured to: sum up the average delay of each of the first segments and the average delay of each of the second segments to obtain an average delay of the target path; and sum up a sum of the squares of the delay standard deviation of each of the first segments and a sum of the squares of the delay standard deviation of each of the second segments, and take an arithmetic square root of the resulting sum to obtain a delay standard deviation of the target path.

In a third aspect, an embodiment of the present disclosure further provides an electronic device, including: a processor and a memory, wherein the processor is electrically connected to the memory, the memory stores executable program codes, and the processor executes a program corresponding to the executable program codes by reading the executable program codes stored in the memory, so as to implement any of the timing sign-off methods according to the embodiments of the present disclosure.

In a fourth aspect, an embodiment of the present disclosure further provides a computer-readable storage medium, which stores one or more programs executable by one or more processors to implement any of the timing sign-off methods according to the embodiments of the present disclosure.

The timing sign-off method and apparatus, the electronic device and the storage medium according to the embodiments of the present disclosure can obtain the first standard cell library corresponding to each of the dies in the chip to be signed off, and use the first standard cell library to perform timing sign-off for the chip to be signed off. The chip to be signed off is obtained by 3D integration of at least two dies, and each of the standard cells in the first standard cell library corresponding to each of the dies owns 3D process corner timing parameters, which include the average delay of each of the standard cells at the 3D process corner and the delay standard deviation of the standard cell at the 3D process corner. Therefore, the 3D process corner timing parameters of each of the standard cells can be used directly to perform timing sign-off for the chip to be signed off. As the timing parameters at the corner specially customized for 3D integration scenario, the 3D process corner timing parameters can be closer to the application scenario of 3D integration, rather than using various combinations of 2D sign-off corners for the dies as in the prior art, which leads to overly pessimistic and complex sign-off, thereby effectively reducing the pessimism and the complexity of timing sign-off for the 3D integrated chips.

Brief Description of the Drawings

In order to more clearly explain the technical solutions in the embodiments of the present disclosure or in the prior art, the drawings to be used in the description of the embodiments or the prior art will be briefly introduced as follows. Obviously, the drawings concerned in the following description only illustrate some embodiments of the present disclosure, and persons of ordinary skill in the art can obtain other drawings from the provided drawings without paying any creative labor.

FIG. 1 illustrates a flowchart of a timing sign-off method according to an embodiment of the present disclosure;
FIG. 2 illustrates a schematic diagram of a relationship between different standard deviations according to an embodiment of the present disclosure;
FIG. 3 illustrates a flowchart of a timing sign-off for a chip to be signed off according to an embodiment of the present disclosure;
FIG. 4 illustrates a detailed flowchart of a timing sign-off method according to an embodiment of the present disclosure;
FIG. 5 illustrates a structural diagram of a timing sign-off apparatus according to an embodiment of the present disclosure; and
FIG. 6 illustrates a structural diagram of an electronic device according to an embodiment of the present disclosure.

Detailed Description of the Embodiments

The embodiments of the present disclosure have been described in detail below with reference to the drawings.
It should be noted that those described are only a part rather than all of the embodiments of the present disclosure. Based on the embodiments in the present disclosure, any other embodiment obtained by persons of ordinary skill in the art without paying any creative labor should fall within the protection scope of the present disclosure.

In a first aspect, an embodiment of the present disclosure provides a timing sign-off method, which can effectively reduce the pessimism and the complexity of timing sign-off for three-dimensional integrated chips.

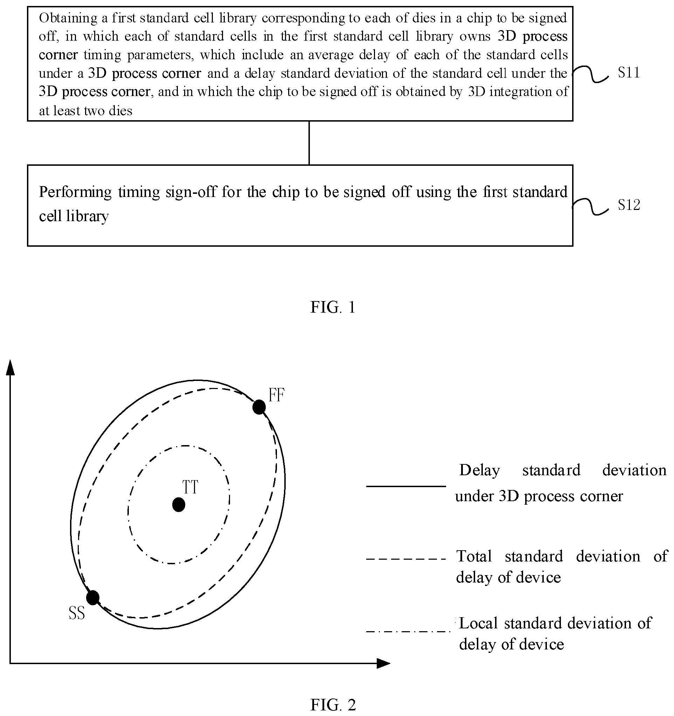

As illustrated in FIG. 1, an embodiment of the present disclosure provides a timing sign-off method, including:

S11: obtaining a first standard cell library corresponding to each of dies in a chip to be signed off, in which each of standard cells in the first standard cell library owns 3D process corner timing parameters, which include an average delay of each of the standard cells at a 3D process corner and a delay standard deviation of the standard cell at the 3D process corner, and in which the chip to be signed off is obtained by 3D integration of at least two dies.

In the embodiment of the present disclosure, the chip to be signed off is a chip required timing sign-off. The chip to be signed off may include at least two dies, which may be in 3D integration. For example, electrical interconnection between different dies may be realized by means of through silicon via (TSV), hybrid bonding, or the like. It should be noted that in the embodiment of the present disclosure, 3D integration is a broad concept, which may generally refer to 2.5D integration, 3D integration, 3.5D integration, or the like.

Each of the dies in the chip to be signed off may include many different devices, which may be implemented by different standard cells in the first standard cell library during circuit design. Devices in different dies may be designed using the same first standard cell library or different first standard cell libraries. In the embodiment of the present disclosure, the first standard cell library differs from the traditional standard cell library applicable to 2D chip scenarios at least in that each of the standard cells in the first standard cell library owns 3D process corner timing parameters, which include an average delay of each of the standard cells at a 3D process corner and a delay standard deviation of the standard cell at the 3D process corner. Here, the 3D process corner may be a corner corresponding to the dies in 3D integration, the delay may be time taken for a signal to be transmitted along a preset path in the chip to be signed off, the average delay may be an average value of the time, and the delay standard deviation may be a time standard deviation.

Specifically, for the chip in a 2D scenario, the standard cell library generally includes the timing parameters of the standard cells at various corners in the 2D scenario. For example, the delay at a fast N fast P Global (FFG) corner is 20 nanoseconds, and the delay at a slow N slow P Global (SSG) corner is 45 nanoseconds. Thus, it is convenient to perform sign-off for the chip in the 2D scenario. However, using such a standard cell library to perform sign-off for the 3D integrated chip may encounter problems such as increased pessimism and overly complex sign-off. Therefore, in this step, the first standard cell library corresponding to each of the dies in the chip to be signed off can be obtained, in which each of the standard cells in the first standard cell library owns 3D process corner timing parameters, which include an average delay of each of the standard cells at a 3D process corner and a delay standard deviation of the standard cell at the 3D process corner, so as to use the 3D process corner timing parameters in the first standard cell library to perform sign-off for the chip to be signed off.

S12: performing timing sign-off for the chip to be signed off using the first standard cell library.

After being obtained, the first standard cell library may be used to perform timing sign-off for the chip to be signed off, which means using the timing parameters of the standard cells in the first standard cell library to calculate whether the delay of each of paths in the chip to be signed off meets the requirements (e.g., whether the delay of the path is within a preset range). In this way, the cross-die timing analysis of the 3D integrated chip is converted into a statistical analysis based on this single 3D integration corner (Statistical On 3DIC Variation).

The timing sign-off method according to the embodiment of the present disclosure can obtain the first standard cell library corresponding to each of the dies in the chip to be signed off, and use the first standard cell library to perform timing sign-off for the chip to be signed off. The chip to be signed off is obtained by 3D integration of at least two dies, and each of the standard cells in the first standard cell library corresponding to each of the dies owns 3D process corner timing parameters, which include the average delay of each of the standard cells at the 3D process corner and the delay standard deviation of the standard cell at the 3D process corner. Therefore, the 3D process corner timing parameters of each of the standard cells can be used directly to perform timing sign-off for the chip to be signed off. As the timing parameters at the corner specially tailored for 3D integration, the 3D process corner timing parameters can be closer to the application scenario of 3D integration, rather than using various combinations of 2D sign-off corners for the dies as in the prior art, which leads to overly pessimistic and complex sign-off, thereby effectively reducing the pessimism and the complexity of timing sign-off for the 3D integrated chips.

Specifically, in an embodiment of the present disclosure, in order to use the first standard cell library to perform timing sign-off, the first standard cell library may be established firstly. For example, before Step S11 of obtaining a first standard cell library corresponding to each of dies in a chip to be signed off, the timing sign-off method according to the embodiment of the present disclosure may further include: obtaining a second standard cell library corresponding to each of the dies in the chip to be signed off, in which each of standard cells in the second standard cell library owns 2D corner timing parameters, which include an average delay of each of the standard cells under 2D conditions and a local standard deviation of a delay of the standard cell under 2D conditions; determining an average delay of each of the standard cells at the 3D process corner according to the average delay of the standard cell under 2D conditions to obtain a first average delay, and determining a delay standard deviation of each of the standard cells at the 3D process corner according to the local standard deviation of the delay of the standard cell at 2D conditions to obtain a first standard deviation; and configuring each of the first average delays and each of the first standard deviations into the second standard cell library to form the first standard cell library.

That is, in this embodiment, the 3D process corner timing parameter of each of the standard cells in the first standard cell library may be obtained based on the 2D corner timing parameter of the standard cell. Specifically, the 2D corner timing parameter may include: an average delay of each of the standard cells under 2D conditions and a local standard deviation of a delay of the standard cell under 2D conditions.

The average delay here may be an average value of any type of delay parameter of the standard cell, such as an average value of the arrival time of a signal from point A to point B of the standard cell, an average value of the setup time of a signal at point B of the standard cell, or an average value of the hold time of a signal at point B of the standard cell, etc. Optionally, 2D corners may include various types, such as an Fast N-Fast P Corner (FF corner) , a Typical N-Typical P Corner (TT corner), an Slow N-Slow P Corner, etc. The average delay may have different values at different corners. For example, the average delay at the Fast N-Fast P Corner (FF corner) may be relatively small, and the average delay at the Slow N-Slow P Corner (SS corner) may be relatively large.

During implementation, determining an average delay of each of the standard cells at the 3D process corner according to the average delay of the standard cell under 2D conditions to obtain a first average delay may include: determining the average delay of each of the standard cells at the 3D process corner according to an average delay of the standard cell at a typical 2D corner to obtain the first average delay. That is to say, in the embodiment of the present disclosure, the average delay at the typical 2D corner may be used as the average delay at the 3D process corner. For example, in a standard cell A1, the average delay of the arrival time from point P1 to point P2 at the typical 2D corner is 56 nanoseconds, so it can be determined that the average delay of the arrival time from point P1 to point P2 for the standard cell A1 at the 3D process corner is also 56 nanoseconds.

In this embodiment, the average value of the standard cell at the typical 2D corner is used as the average delay of the standard cell at the 3D process corner. However, the embodiments of the present disclosure are not limited thereto. In other embodiments of the present disclosure, the average delay of the standard cell at the 3D process corner may also be determined based on the average delay of the standard cell at other 2D corner as needed. For example, in an example, an average delay t3 of the standard cell at the 3D process corner may also be determined according to an average delay t1 of the standard cell at the FF corner and/or an average delay t2 of the standard cell at the SS corner under 2D conditions, for example, t3 = (t1 + t2)/2. The embodiments of the present disclosure are not limited thereto.

The average delay has been introduced above, and the local standard deviation of the delay is introduced below.

In the embodiments of the present disclosure, the local standard deviation of the delay may be the standard deviation of any type of delay parameter of the standard cell, such as the standard deviation of the arrival time of a signal from point A to point B, the standard deviation of the setup time of a signal at point A, or the like. In an example, determining a delay standard deviation of each of the standard cells at the 3D process corner according to the local standard deviation of the delay of the standard cell under 2D conditions to obtain a first standard deviation may include: determining a total standard deviation and a local standard deviation of a delay of each of devices in each of the dies of the chip to be signed off through a device model provided by a wafer fab or through simulation; determining a standard deviation expansion coefficient of each of the devices according to the total standard deviation and the local standard deviation of the delay of the device; and determining a delay standard deviation of each of the standard cells at the 3D process corner according to the local standard deviation of the delay of the standard cell under 2D conditions and the standard deviation expansion coefficient of the device corresponding to the standard cell, so as to obtain the first standard deviation.

In an embodiment of the present disclosure, the device model provided by the wafer fab may be a spice model. In the chip to be signed off, various devices in each of the die have their corresponding device models, and the total standard deviation and the local standard deviation of the delay of a device may be determined based on the corresponding device model. In another embodiment of the present disclosure, simulation may also be performed on various devices in the die to determine the total standard deviation and the local standard deviation of the delay of each of the devices.

Further, the standard deviation expansion coefficient of each of the devices may be determined according to the total standard deviation and the local standard deviation of the delay of the device. In an example, the standard deviation expansion coefficient of each of the devices may be equal to a ratio of the total standard deviation of the delay of the device to the local standard deviation of the delay of the device. On this basis, the first standard deviation of each of the standard cells may be equal to a product of the local standard deviation of the delay of the standard cell under 2D conditions and the standard deviation expansion coefficient of the device corresponding to the standard cell. Exemplarily, the relationships among the delay standard deviation at the 3D process corner (i.e., the first standard deviation), the total standard deviation of the delay of the device, and the local standard deviation of the delay of the device may be illustrated in FIG. 2. In which, TT represents the delay at a typical corner, FF represents the delay at a fast N fast P corner, and SS represents the delay at a slow N slow P corner. As can be seen from FIG. 2, after an ellipse represented by the local standard deviation of the delay of the device is expanded by a multiple (the expansion multiple is determined by the standard deviation expansion coefficient), an ellipse represented by the delay standard deviation at the 3D process corner is obtained.

For example, in an embodiment of the present disclosure, according to the device model provided by the wafer fab, for an inverter inv1 in a die, when a total standard deviation of a propagation delay from an input end to an output end is a, and a local standard deviation is b, a standard deviation expansion coefficient of the propagation delay of the inverter inv1 from the input end to the output end is k = a/b. On this basis, the first standard deviation of the standard cell corresponding to the inverter inv1 may be equal to the product (k*c) of the local standard deviation (e.g., c) of the delay of the standard cell under 2D conditions and the standard deviation expansion coefficient (e.g., k) of the device corresponding to the standard cell, that is, the first standard deviation is equal to k*c.

The first average delay and the first standard deviation obtained may be added to the standard cells corresponding to the second standard cell library, thereby forming the first standard cell library. On this basis, the first standard cell library corresponding to each of the dies in the chip to be signed off can be obtained in step S11, and further in step S12, the first standard cell library may be used to perform timing sign-off for the chip to be signed off.

In an embodiment of the present disclosure, performing timing sign-off for the chip to be signed off using the first standard cell library means using the timing parameters in the first standard cell library to calculate whether the delay parameter of each of the paths in the chip to be signed off falls within a preset parameter range. In which, each of the paths may include one or more standard cells, and the delay parameter of each of the paths may be determined by the delay parameter of each of the standard cells on the path.

In an example, each of the paths in the chip to be signed off may include segments inside the dies and segments between the dies, and the delay parameter of the path can be obtained according to the delay parameters of these two types of segments.

Specifically, in an embodiment of the present disclosure, the performing timing sign-off for the chip to be signed off using the first standard cell library may include: determining a delay parameter of a first segment of a target path in the chip to be signed off based on the first standard cell library, and determining a delay parameter of a second segment of the target path based on a metal wire delay model, in which the first segment is a portion of the target path located inside each of the dies, and the second segment is a portion of the target path located between adjacent dies; determining a delay parameter of the target path according to the delay parameter of the first segment and the delay parameter of the second segment; and determining whether the target path passes the sign-off depending on whether the delay parameter of the target path falls within a preset parameter range.

In which, the target path may be any path in the chip to be signed off that requires timing sign-off. The target path may involve all the dies in the chip to be signed off, or only a part of the dies in the chip to be signed off, which is not limited by the embodiments of the present disclosure. For example, in an example, the chip to be signed off may include die1, die2, and die3. Target path 1 may traverse die1, die2, and die3, that is, target path 1 involves three dies in the chip to be signed off; and target path 2 may traverse die1 and die2, that is, target path 2 involves 2 dies in the chip to be signed off.

In a case where the target path involves 2 or more dies in the chip to be signed off, the target path may include two types of segments, i.e., the first segment and the second segment. In which, the first segment may be a portion of the target path located inside each of the dies. For example, a portion of the target path located inside die1 is one first segment, and a portion of the target path located inside die2 is another first segment. The second segment may be a portion of the target path located between adjacent dies, such as a portion that interconnects die1 and die2.

In an embodiment of the present disclosure, when timing sign-off is performed on the target path, different methods may be used to calculate the delay parameters of the first segment and the second segment. Specifically, since the first segment is a portion of the target path located inside each of the dies, the delay parameter of the first segment may be calculated according to the standard cells in the first standard cell library corresponding to the die; since the second segment is a portion of the target path located between adjacent dies, and the delay of this portion is mostly caused by the resistance, capacitance, etc. of the metal wire, the delay parameter of the second segment may be calculated according to the metal wire delay model.

After the delay parameter of the first segment and the delay parameter of the second segment are obtained, the delay parameter of the target path may be determined according to the delay parameter of the first segment and the delay parameter of the second segment. Specifically, in an embodiment of the present disclosure, the delay parameter of the first segment may include an average delay of the first segment and a delay standard deviation of the first segment; the delay parameter of the second segment may include the average delay of the second segment and the delay standard deviation of the second segment. On this basis, determining the delay parameter of the target path according to the delay parameter of the first segment and the delay parameter of the second segment may specifically include: summing the average delay of each of the first segments and the average delay of each of the second segments to obtain an average delay of the target path; summing a sum of the squares of the delay standard deviation of each of the first segments and a sum of the squares of the delay standard deviation of each of the second segments, and taking an arithmetic square root of the resulting sum to obtain a delay standard deviation of the target path.

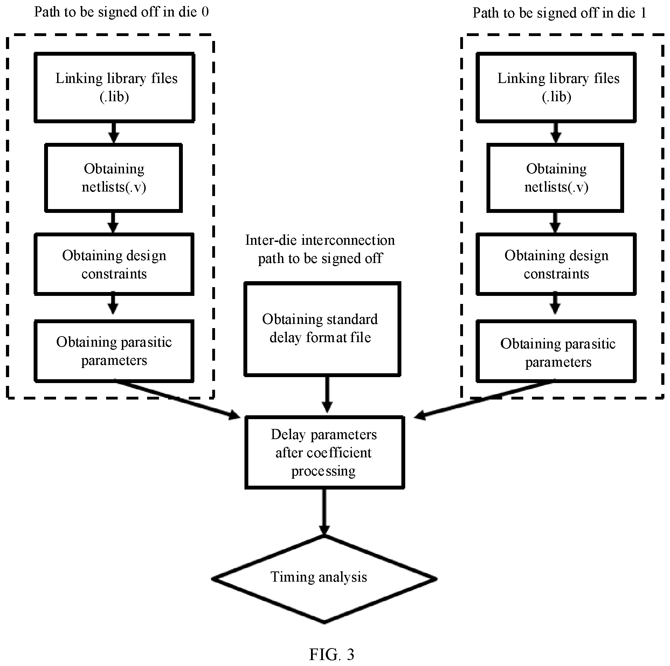

Exemplarily, in an embodiment of the present disclosure, the chip to be signed off includes die0 and die1, which are 3D-integrated by means of hybrid bonding or the like to form the chip to be signed off. As illustrated in FIG. 3, when sign-off is performed on the chip to be signed off, the corresponding first standard cell libraries may be linked to die0 and die1 respectively, to obtain information such as timing sign-off netlists, design constraints, and parasitic parameters of the paths to be signed off in die0 and die1. For the inter-die interconnection path to be signed off between die0 and die1, the corresponding standard delay format file can be obtained. Further, the delay parameter of each of the standard cells in the paths to be signed off in die0 and die1 and the delay parameter of the inter-die interconnection path to be signed off can be obtained, in which each of the delay parameters is a delay parameter suitable for 3D integrated chips obtained after the aforementioned coefficient processing, and then timing analysis can be performed on the chip to be signed off.

A comparison between a sign-off method according to the embodiments of the present disclosure and a sign-off method in the prior art is given as follows.

### Solution in the Prior Art

The chip to be signed off is formed by stacking three dies, which are consistent in voltage and temperature conditions and achieve cross-die clock synchronization.

TTG delay = 100 picoseconds (ps), FFG delay = 85 ps, SSG delay = 115 ps; local variation sigma = 5 ps.

In which, Typical-Typical Global corner (or Typical-Typical corner, TTG) delay is the average value of the arrival time of the segments of the target path located inside each of the dies at the typical corner; Fast-Fast Global corner (FFG) delay is the average value of the arrival time of the segments of the target path located inside each of the dies at the fast N fast P corner; the Slow-Slow Global corner (SSG) delay is the average value of the arrival time of the segments of the target path located inside each of the dies at the slow N slow P corner.

In a case where a solution that combines the global corner and the local variation is adopted, when the global corners of the three dies in the chip to be signed off are all typical-typical corners (TTGs), the global corner combination of the three dies is TTG+TTG+TTG. At this corner combination, the timing parameters are as follows:

$$\text{Path arrival mean} = \text{delay\_die0} + \text{delay\_die1} + \text{delay\_die2} = 100+100+100 = 300 \text{ (ps)}$$

$$\text{Path arrival sigma} = \sqrt{5^2 + 5^2 + 5^2} \approx 8.5\text{ps}$$

where the path arrival mean represents the average value of the arrival time of the target path in the chip to be signed off (i.e., passing through the three dies of the chip to be signed off); and the path arrival sigma represents the standard deviation of the arrival time of the target path in the chip to be signed off.

Similarly, the timing parameters of the three dies at other corner combinations can be calculated, and the specific results are shown in Table 1.

Table 1

| Sign-off corner | Average value of arrival time | Local standard deviation of arrival time | Minimum value of arrival time | Maximum value of arrival time | Range of arrival time |
|---|---|---|---|---|---|
| TTG+TTG+TTG | 300 | 8.5 | 274.5 | 325.5 | 370.5-229.5=141 |
| TTG+TTG+FFG | 285 | 8.5 | 259.5 | 310.5 | |
| ...... | ...... | ...... | ...... | ...... | |
| FFG+FFG+FFG | 255 | 8.5 | 229.5 (*) | 280.5 | |
| ...... | ...... | ...... | ...... | ...... | |
| SSG+SSG+FFG | 315 | 8.5 | 289.5 | 340.5 | |
| SSG+SSG+SSG | 345 | 8.5 | 319.5 | 370.5 (*) | |

As can be seen from Table 1, the three dies may have 3*3*3 = 27 corner combinations, which means the number of the sign-off corners is 27. In various corner combinations of the three dies, the minimum value of the arrival time of the path allowable at the 3-times standard deviation occurs at the corner combination of FFG+FFG+FFG, the specific value is 255-8.5*3=229.5 (see the part marked with * in Table 1). The maximum value of the arrival time of the path allowable at the 3-times standard deviation occurs at the corner combination of SSG+SSG+SSG, the specific value is 345+8.5*3=370.5 (see the part marked with * in Table 1). The difference between the above two values is 370.5-229.5=141, The coverage range is relatively large. However, this situation has a very low probability of occurrence in actual extreme scenarios, so that sign-off in this way may be pessimistic.

## Solution in the Embodiments of the Present Disclosure

In an embodiment of the present disclosure, sign-off can be performed on the chip to be signed off based on the 3D process corner. In this sign-off scenario, the sign-off corner combination of each of the dies corresponding to the 3D process corner is a single combination of TTG+TTG+TTG. Therefore, the number of sign-off corner combinations is 1, which is significantly less than the 27 sign-off corner combinations in the prior art, thereby effectively reducing the complexity of timing sign-off for the 3D integrated chip.

Optionally, during sign-off, if only the average delay and the delay standard deviation of the target path inside the die are considered, and the average delay and the delay standard deviation of the target path between the dies are not considered, the delay standard deviation of the target path in each of the dies at the 3D process corner (i.e., the delay standard deviation of each of the first segments in the target path) may be determined according to the delay standard deviation (e.g., the standard deviation of the arrival time) of each of the standard cells in each of the dies of the chip to be signed off at the 3D process corner. For example, the delay standard deviation of the target path in each of the dies at the 3D process corner is 10.

Thus,

$$\text{Path arrival mean=delay\_die0+delay\_die1 + delay\_die2 =100+100+100=300 (ps)}$$

$$\text{Path arrival sigma} = \sqrt{10^2 + 10^2 + 10^2} \approx 17 \text{ (ps)}$$

In which, the path arrival mean represents the average value of the arrival time of the target path in the chip to be signed off (i.e., passing through the three dies of the chip to be signed off), and the path arrival sigma represents the standard deviation of the arrival time of the target path in the chip to be signed off.

It can be seen that the minimum value of the arrival time of the target path allowable at the 3-times standard deviation is 300-17*3=249, the maximum value of the arrival time of the target path allowable at the 3-times standard deviation is 300+17*3=351, and a difference therebetween is 351-249=102 ps, which is much smaller than 141 in the solution of the prior art. Therefore, the pessimism can be effectively reduced. For the specific timing parameters, please refer to Table 2.

Table 2

| Sign-off corner | Average value of arrival time | Local standard deviation of arrival time | Minimum value of arrival time | Maximum value of arrival time | Range of arrival time |
|---|---|---|---|---|---|
| TTG+TTG+TTG | 300 | 17 | 249 | 351 | 351-249=102 |

In another embodiment of the present disclosure, if the average delay and the delay standard deviation of the target path between dies are considered, then in addition to the determination of the average delay and the delay standard deviation of the first segment as in the aforementioned embodiment, it is possible to determine the average delay and the delay standard deviation of the portion of the target path that are located between the dies in the chip to be signed off (i.e., the average delay and the delay standard deviation of each of the second segments of the target path). For example, in an example, the portion of the target path between the dies has the average delay of 10 and the delay standard deviation of 5.

Thus, the following conclusions can be drawn:

Path arrival mean=delay\_die0+delay\_0-1+delay\_die1+delay\_1-2+ delay\_die2 =100+10+100+10+100=320 (ps)

$$\text{Path arrival sigma} = \sqrt{10^2 + 5^2 + 10^2 + 5^2 + 10^2} \approx 18.7 \text{ (ps)}$$

The timing sign-off method according to the embodiments of the present disclosure is elaborated below through a specific embodiment.

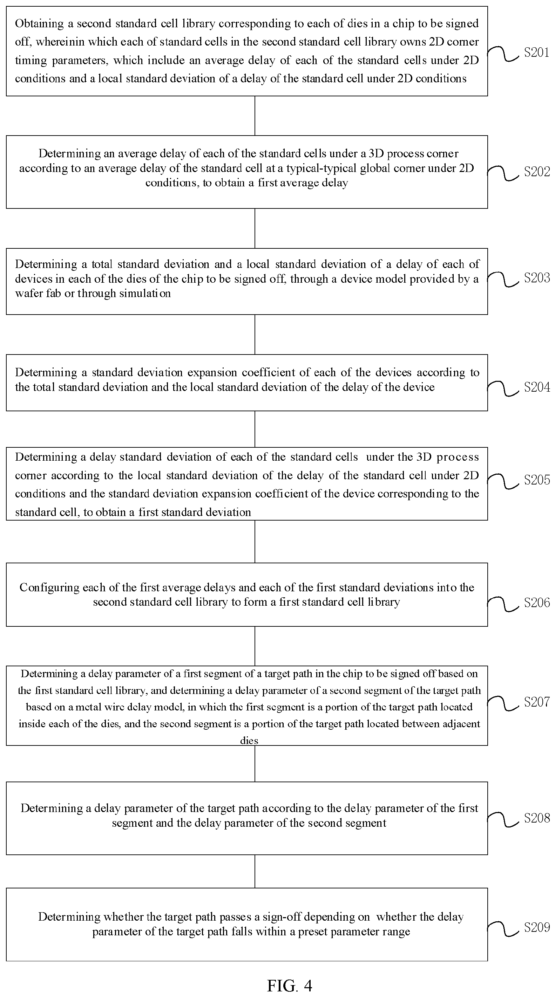

As illustrated in FIG. 4, a timing sign-off method according to an embodiment of the present disclosure may include:

S201: obtaining a second standard cell library corresponding to each of dies in a chip to be signed off, in which each of standard cells in the second standard cell library owns 2D corner timing parameters, which include an average delay of each of the standard cells under 2D conditions and a local standard deviation of a delay of the standard cell under 2D conditions.

S202: determining an average delay of each of the standard cells at a 3D process corner according to an average delay of the standard cell at a typical-typical global corner under 2D conditions, to obtain a first average delay.

S203: determining a total standard deviation and a local standard deviation of a delay of each of devices in each of the dies of the chip to be signed off, through a device model provided by a wafer fab or through simulation.

S204: determining a standard deviation expansion coefficient of each of the devices according to the total standard deviation and the local standard deviation of the delay of the device.

S205: determining a delay standard deviation of each of the standard cells at the 3D process corner according to the local standard deviation of the delay of the standard cell under 2D conditions and the standard deviation expansion coefficient of the device corresponding to the standard cell, to obtain a first standard deviation.

S206: configuring each of the first average delays and each of the first standard deviations into the second standard cell library to form a first standard cell library.

S207: determining a delay parameter of a first segment of a target path in the chip to be signed off based on the first standard cell library, and determining a delay parameter of a second segment of the target path based on a metal wire delay model, in which the first segment is a portion of the target path located inside each of the dies, and the second segment is a portion of the target path located between adjacent dies.

S208: determining a delay parameter of the target path according to the delay parameter of the first segment and the delay parameter of the second segment.

Exemplarily, the average delay of each of the first segments and the average delay of each of the second segments may be summed up to obtain an average delay of the target path; and a sum of the squares of the delay standard deviation of each of the first segments and a sum of the squares of the delay standard deviation of each of the second segments may be summed up to take an arithmetic square root of the resulting sum to obtain a delay standard deviation of the target path.

S209: determining whether the target path passes a sign-off depending on whether the delay parameter of the target path falls within a preset parameter range.

In a second aspect, the embodiments of the present disclosure provide a timing sign-off apparatus capable of effectively reducing the pessimism and the complexity of timing sign-off for 3D integrated chips.

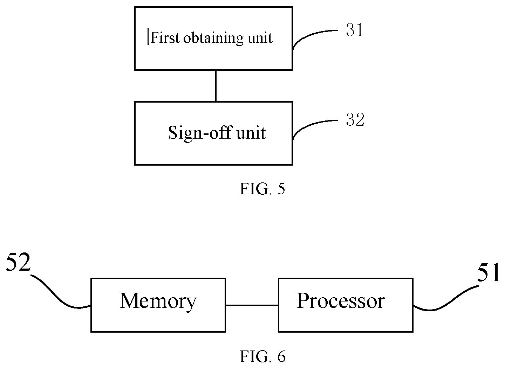

As illustrated in FIG. 5, an embodiment of the present disclosure further provides a timing sign-off apparatus, including:

a first obtaining unit 31 configured to obtain a first standard cell library corresponding to each of dies in a chip to be signed off, in which each of standard cells in the first standard cell library owns 3D process corner timing parameters, which include an average delay of each of the standard cells at a 3D process corner and a delay standard deviation of the standard cell at the 3D process corner, and in which the chip to be signed off is obtained by 3D integration of at least two dies; and

a sign-off unit 32 configured to use the first standard cell library to perform timing sign-off for the chip to be signed off.

The timing sign-off apparatus according to the embodiment of the present disclosure can obtain the first standard cell library corresponding to each of the dies in the chip to be signed off, and use the first standard cell library to perform timing sign-off for the chip to be signed off. The chip to be signed off is obtained by 3D integration of at least two dies, and each of the standard cells in the first standard cell library corresponding to each of the dies owns 3D process corner timing parameters, which include the average delay of each of the standard cells at the 3D process corner and the delay standard deviation of the standard cell at the 3D process corner. Therefore, the 3D process corner timing parameters of each of the standard cells can be used directly to perform timing sign-off for the chip to be signed off. As the 3D process corner timing parameters are specially customized for 3D integration scenario, the 3D process corner timing parameters can be closer to the application scenario of 3D integration, rather than using various combinations of 2D sign-off corners for the dies as in the prior art, which leads to overly pessimistic and complex sign-off, thereby effectively reducing the pessimism and the complexity of timing sign-off for the 3D integrated chips.

In an implementation, the timing sign-off apparatus according to the embodiment of the present disclosure may further include:

a second obtaining unit configured to, before obtaining a first standard cell library corresponding to each of dies in a chip to be signed off, obtain a second standard cell library corresponding to each of the dies in the chip to be signed off, in which each of standard cells in the second standard cell library owns 2D corner timing parameters, which include an average delay of each of the standard cells under 2D conditions and a local standard deviation of a delay of the standard cell under 2D conditions;

a determination unit configured to determine an average delay of each of the standard cells at the 3D process corner according to the average delay of the standard cell under 2D conditions to obtain a first average delay, and determine a delay standard deviation of each of the standard cells at the 3D process corner according to the local standard deviation of the delay of the standard cell under 2D conditions to obtain a first standard deviation; and

a configuration unit configured to configure each of the first average delays and each of the first standard deviations into the second standard cell library to form the first standard cell library.

In an implementation, the determination unit includes a first determination module configured to determine the average delay of each of the standard cells at the 3D process corner according to an average delay of the standard cell at a typical 2D corner to obtain the first average delay.

In an implementation, the determination unit includes a second determination module configured to:

determine a total standard deviation and a local standard deviation of a delay of each of devices in each of the dies of the chip to be signed off through a device model provided by a wafer fab or through simulation;

determine a standard deviation expansion coefficient of each of the devices according to the total standard deviation and the local standard deviation of the delay of the device; and

determine a delay standard deviation of each of the standard cells at the 3D process corner according to the local standard deviation of the delay of the standard cell under 2D conditions and the standard deviation expansion coefficient of the device corresponding to the standard cell, so as to obtain the first standard deviation.

In an implementation, the standard deviation expansion coefficient of each of the devices is equal to a ratio of the total standard deviation of the delay of the device to the local standard deviation of the delay of the device; and the first standard deviation of each of the standard cells is equal to a product of the local standard deviation of the delay of the standard cell under 2D conditions and the standard deviation expansion coefficient of the device corresponding to the standard cell.

In an implementation, the sign-off unit 31 includes:

a third determination module configured to determine a delay parameter of a first segment of a target path in the chip to be signed off based on the first standard cell library, and determine a delay parameter of a second segment of the target path based on a metal wire delay model, in which the first segment is a portion of the target path located inside each of the dies, and the second segment is a portion of the target path located between adjacent dies;

a fourth determination module configured to determine a delay parameter of the target path according to the delay parameter of the first segment and the delay parameter of the second segment; and

a fifth determination module configured to determine whether the target path passes the sign-off depending on whether the delay parameter of the target path falls within a preset parameter range.

In an implementation, the delay parameter of the first segment includes an average delay of the first segment and a delay standard deviation of the first segment; the delay parameter of the second segment includes an average delay of the second segment and a delay standard deviation of the second segment; the fourth determination module is specifically configured to sum up the average delay of each of the first segments and the average delay of each of the second segments to obtain an average delay of the target path; and sum up a sum of the squares of the delay standard deviation of each of the first segments and a sum of the squares of the delay standard deviation of each of the second segments, and take an arithmetic square root of the resulting sum to obtain a delay standard deviation of the target path.

In a third aspect, an embodiment of the present disclosure further provides an electronic device capable of effectively reducing the pessimism and the complexity of timing sign-off for 3D integrated chips.

As illustrated in FIG. 6, an electronic device according to an embodiment of the present disclosure may include: a processor 51 and a memory 52, in which the processor 51 is electrically connected to the memory 52, the memory 52 stores executable program codes, and the processor 51 executes a program corresponding to the executable program codes by reading the executable program codes stored in the memory 52, so as to implement any of the timing sign-off methods according to the embodiments of the present disclosure.

For the specific process of performing the above steps by the processor 51 and the steps further performed by the processor 51 by running the executable program codes, please refer to the description of the aforementioned embodiments, which may not be repeated here.

In a fourth aspect, an embodiment of the present disclosure further provides a computer-readable storage medium, which stores one or more programs executable by one or more processors to implement any of the timing sign-off methods according to the embodiments of the present disclosure, so that the corresponding technical effects can also be achieved. The detailed description has been provided above, which may not be repeated here.

To be noted, the relational terms such as "first" and "second" herein are only used to distinguish one entity or operation from another entity or operation, and do not necessarily require or imply that there is any such actual relationship or sequence between these entities or operations. Furthermore, the terms "comprise" and "include" or any other variants thereof are intended to cover non-exclusive inclusions, so that a process, a method, an article or a device including a series of elements not only includes those elements, but also includes other elements not explicitly listed, or further includes elements inherent to such process, method, article or device. Without further restrictions, an element defined by the phrase "comprising a ..." does not exclude the existence of other identical elements in a process, a method, an article or a device that includes the element.

Various embodiments in the present disclosure are described in a related manner, and the same or similar parts between the embodiments can be referred to each other. Each embodiment focuses on the differences from other embodiments.

In particular, the apparatus embodiments are described simply since they are substantially similar to the method embodiments, and reference can be made to the corresponding description of the method embodiments.

For the convenience of description, the above apparatuses are described by being divided into various units/modules in terms of functions. Of course, the functions of various units/modules can be realized in one or more pieces of software and/or hardware during implementation of the present disclosure.

Persons of ordinary skill in the art can understand that all or part of the procedures of the methods according to the above embodiments can be implemented by instructing relevant hardware through a computer program, which may be stored in a computer-readable storage medium, and when executed, computer program may include the procedures of the above methods. In which, the storage medium may be a magnetic disk, an optical disc, a Read-Only Memory (ROM), a Random Access Memory (RAM), or the like.

Those described above are only specific embodiments of the present disclosure, but the protection scope of the present disclosure is not limited thereto. Any change or replacement easily conceivable for persons skilled in the art within the technical scope disclosed in the present disclosure should be covered by the protection scope of the present disclosure. Therefore, the protection scope of the present disclosure should be subjected to the protection scope of the claims.

## Claims

1. A timing sign-off method, comprising:

   obtaining a first standard cell library corresponding to each of dies in a chip to be signed off, wherein each of standard cells in the first standard cell library owns three-dimensional (3D) corner timing parameters, the 3D process corner timing parameters comprise an average delay of each of the standard cells at a 3D process corner and a delay standard deviation of the standard cell at the 3D process corner, and wherein the chip to be signed off is obtained by 3D integration of at least two dies; and
   performing timing sign-off for the chip to be signed off using the first standard cell library.

2. The method according to claim 1, wherein before the obtaining a first standard cell library corresponding to each of dies in a chip to be signed off, the method further comprises:

   obtaining a second standard cell library corresponding to each of the dies in the chip to be signed off, wherein each of standard cells in the second standard cell library owns two-dimensional (2D) corner timing parameters, the 2D corner timing parameters comprise an average delay of each of the standard cells under 2D conditions and a local standard deviation of a delay of the standard cell under 2D conditions;
   determining an average delay of each of the standard cells at the 3D process corner according to the average delay of the standard cell under 2D conditions to obtain a first average delay, and determining a delay standard deviation of each of the standard cells at the 3D process corner according to the local standard deviation of the delay of the standard cell under 2D conditions to obtain a first standard deviation; and
   configuring each of the first average delays and each of the first standard deviations into the second standard cell library to form the first standard cell library.

3. The method according to claim 2, wherein the determining an average delay of each of the standard cells at the 3D process corner according to the average delay of the standard cell under 2D conditions to obtain a first average delay comprises:
   determining the average delay of each of the standard cells at the 3D process corner according to an average delay of the standard cell at a typical-typical corner under 2D conditions to obtain the first average delay.

4. The method according to claim 2, wherein the determining a delay standard deviation of each of the standard cells at the 3D process corner according to the local standard deviation of the delay of the standard cell under 2D conditions to obtain a first standard deviation comprises:

determining a total standard deviation and a local standard deviation of a delay of each of devices in each of the dies of the chip to be signed off by using a device model provided by a wafer fab or by simulation;

determining a standard deviation expansion coefficient of each of the devices according to the total standard deviation and the local standard deviation of the delay of the device; and

determining a delay standard deviation of each of the standard cells at the 3D process corner according to the local standard deviation of the delay of the standard cell under 2D conditions and the standard deviation expansion coefficient of the device corresponding to the standard cell, so as to obtain the first standard deviation.

5. The method according to claim 4, wherein the standard deviation expansion coefficient of each of the devices is equal to a ratio of the total standard deviation of the delay of the device to the local standard deviation of the delay of the device; and

the first standard deviation of each of the standard cells is equal to a product of the local standard deviation of the delay of the standard cell under 2D conditions and the standard deviation expansion coefficient of the device corresponding to the standard cell.

6. The method according to any one of claims 1 to 5, wherein the performing timing sign-off for the chip to be signed off using the first standard cell library comprises:

determining a delay parameter of a first segment of a target path in the chip to be signed off based on the first standard cell library, and determining a delay parameter of a second segment of the target path based on a metal wire delay model, wherein the first segment is a portion of the target path located inside each of the dies, and the second segment is a portion of the target path located between adjacent dies;

determining a delay parameter of the target path according to the delay parameter of the first segment and the delay parameter of the second segment; and

determining whether the target path passes the sign-off depending on whether the delay parameter of the target path falls within a preset parameter range.

7. The method according to claim 6, wherein the delay parameter of the first segment comprises an average delay of the first segment and a delay standard deviation of the first segment; and the delay parameter of the second segment comprises an average delay of the second segment and a delay standard deviation of the second segment;

the determining a delay parameter of the target path according to the delay parameter of the first segment and the delay parameter of the second segment comprises:

summing the average delay of each of the first segments and the average delay of each of the second segments to obtain an average delay of the target path; and

summing a sum of the squares of the delay standard deviation of each of the first segments and a sum of the squares of the delay standard deviation of each of the second segments, and taking an arithmetic square root of the resulting sum to obtain a delay standard deviation of the target path.

8. A timing sign-off apparatus, comprising:

a first obtaining unit configured to obtain a first standard cell library corresponding to each of dies in a chip to be signed off, wherein each of standard cells in the first standard cell library owns 3D process corner timing parameters, the 3D process corner timing parameters comprise an average delay of each of the standard cells at a 3D process corner and a delay standard deviation of the standard cell at the 3D process corner, and wherein the chip to be signed off is obtained by 3D integration of at least two dies; and

a sign-off unit configured to perform timing sign-off for the chip to be signed off using the first standard cell library.

9. The apparatus according to claim 8, further comprising:

a second obtaining unit configured to, before obtaining a first standard cell library corresponding to each of dies in a chip to be signed off, obtain a second standard cell library corresponding to each of the dies in the chip to be signed off, wherein each of standard cells in the second standard cell library owns 2D corner timing parameters, the 2D corner timing parameters comprise an average delay of each of the standard cells under 2D conditions and a local standard deviation of a delay of the standard cell under 2D conditions;

a determination unit configured to determine an average delay of each of the standard cells at the 3D process corner according to the average delay of the standard cell under 2D conditions to obtain a first average delay, and determine a delay standard deviation of each of the standard cells at the 3D process corner according to the local standard deviation of the delay of the standard cell under 2D conditions to obtain a first standard deviation; and

a configuration unit configured to configure each of the first average delays and each of the first standard deviations into the second standard cell library to form the first standard cell library.

10. The apparatus according to claim 9, wherein the determination unit comprises a first determination module configured to determine the average delay of each of the standard cells at the 3D process corner according to an average delay of the standard cell at a typical-typical corner under 2D conditions to obtain the first average delay.

11. The apparatus according to claim 9, wherein the determination unit comprises a second determination module configured to:

determine a total standard deviation and a local standard deviation of a delay of each of devices in each of the dies of the chip to be signed off by using a device model provided by a wafer fab or by simulation;

determine a standard deviation expansion coefficient of each of the devices according to the total standard deviation and the local standard deviation of the delay of the device; and

determine a delay standard deviation of each of the standard cells at the 3D process corner according to the local standard deviation of the delay of the standard cell under 2D conditions and the standard deviation expansion coefficient of the device corresponding to the standard cell, so as to obtain the first standard deviation.

12. The apparatus according to claim 11, wherein the standard deviation expansion coefficient of each of the devices is equal to a ratio of the total standard deviation of the delay of the device to the local standard deviation of the delay of the device; and

the first standard deviation of each of the standard cells is equal to a product of the local standard deviation of the delay of the standard cell under 2D conditions and the standard deviation expansion coefficient of the device corresponding to the standard cell.

13. The apparatus according to any one of claims 8 to 12, wherein the sign-off unit comprises:

a third determination module configured to determine a delay parameter of a first segment of a target path in the chip to be signed off based on the first standard cell library, and determine a delay parameter of a second segment of the target path based on a metal wire delay model, wherein the first segment is a portion of the target path located inside each of the dies, and the second segment is a portion of the target path located between adjacent dies;

a fourth determination module configured to determine a delay parameter of the target path according to the delay parameter of the first segment and the delay parameter of the second segment; and

a fifth determination module configured to determine whether the target path passes the sign-off depending on whether the delay parameter of the target path falls within a preset parameter range.

14. The apparatus according to claim 13, wherein the delay parameter of the first segment comprises an average delay of the first segment and a delay standard deviation of the first segment; and the delay parameter of the second segment comprises an average delay of the second segment and a delay standard deviation of the second segment; the fourth determination module is specifically configured to:

sum up the average delay of each of the first segments and the average delay of each of the second segments to obtain an average delay of the target path; and

sum up a sum of the squares of the delay standard deviation of each of the first segments and a sum of the squares of the delay standard deviation of each of the second segments, and take an arithmetic square root of the resulting sum to obtain a delay standard deviation of the target path.

15. An electronic device, comprising: a processor and a memory, wherein the processor is electrically connected to the memory, the memory stores executable program codes, and the processor executes a program corresponding to the executable program codes by reading the executable program codes stored in the memory, so as to implement the timing sign-off method according to any one of claims 1 to 7.

16. A computer-readable storage medium, which stores one or more programs executable by one or more processors to implement the timing sign-off method according to any one of claims 1 to 7.

Obtaining a first standard cell library corresponding to each of dies in a chip to be signed off, in which each of standard cells in the first standard cell library owns 3D process corner timing parameters, which include an average delay of each of the standard cells under a 3D process corner and a delay standard deviation of the standard cell under the 3D process corner, and in which the chip to be signed off is obtained by 3D integration of at least two dies ⟶ S11

Performing timing sign-off for the chip to be signed off using the first standard cell library ⟶ S12

FIG. 1

FF

TT

SS

_____ Delay standard deviation under 3D process corner

– – – – – – Total standard deviation of delay of device

– · – · – · – · Local standard deviation of delay of device

FIG. 2

Path to be signed off in die 0

Linking library files
(.lib)

Obtaining
netlists(.v)

Obtaining design
constraints

Obtaining parasitic
parameters

Inter-die interconnection
path to be signed off

Obtaining standard
delay format file

Path to be signed off in die 1

Linking library files
(.lib)

Obtaining
netlists(.v)

Obtaining design
constraints

Obtaining parasitic
parameters

Delay parameters
after coefficient
processing

Timing analysis

FIG. 3

Obtaining a second standard cell library corresponding to each of dies in a chip to be signed off, whereinin which each of standard cells in the second standard cell library owns 2D corner timing parameters, which include an average delay of each of the standard cells under 2D conditions and a local standard deviation of a delay of the standard cell under 2D conditions — S201

Determining an average delay of each of the standard cells under a 3D process corner according to an average delay of the standard cell at a typical-typical global corner under 2D conditions, to obtain a first average delay — S202

Determining a total standard deviation and a local standard deviation of a delay of each of devices in each of the dies of the chip to be signed off, through a device model provided by a wafer fab or through simulation — S203

Determining a standard deviation expansion coefficient of each of the devices according to the total standard deviation and the local standard deviation of the delay of the device — S204

Determining a delay standard deviation of each of the standard cells under the 3D process corner according to the local standard deviation of the delay of the standard cell under 2D conditions and the standard deviation expansion coefficient of the device corresponding to the standard cell, to obtain a first standard deviation — S205

Configuring each of the first average delays and each of the first standard deviations into the second standard cell library to form a first standard cell library — S206

Determining a delay parameter of a first segment of a target path in the chip to be signed off based on the first standard cell library, and determining a delay parameter of a second segment of the target path based on a metal wire delay model, in which the first segment is a portion of the target path located inside each of the dies, and the second segment is a portion of the target path located between adjacent dies — S207

Determining a delay parameter of the target path according to the delay parameter of the first segment and the delay parameter of the second segment — S208

Determining whether the target path passes a sign-off depending on whether the delay parameter of the target path falls within a preset parameter range — S209

FIG. 4

[First obtaining unit ⎯ 31

Sign-off unit ⎯ 32

FIG. 5

52 ⎯ Memory — Processor ⎯ 51

FIG. 6

**TRANSLATION**

## INTERNATIONAL SEARCH REPORT

| International application No. |
| --- |
| **PCT/CN2025/100803** |

| A. CLASSIFICATION OF SUBJECT MATTER |
| --- |
| G06F 30/3312(2020.01)i |
| According to International Patent Classification (IPC) or to both national classification and IPC |

| B. FIELDS SEARCHED |
| --- |
| Minimum documentation searched (classification system followed by classification symbols) |
| IPC: G06F |
| Documentation searched other than minimum documentation to the extent that such documents are included in the fields searched |
| Electronic data base consulted during the international search (name of data base and, where practicable, search terms used) |
| CNABS, CNTXT, CNKI, BAIDU, VEN, WOTXT, EPTXT, USTXT, IEEE: 签核, 芯片, 晶粒, 管芯, 角, 延时, 时延, 标准差, 三维, 二维, 库, 参数, 路径, signoff, chip, die, corner, delay, latency, standard deviation, three dimensional, two dimensional, library, parameter, path |

| C. DOCUMENTS CONSIDERED TO BE RELEVANT |  |  |
| --- | --- | --- |
| Category* | Citation of document, with indication, where appropriate, of the relevant passages | Relevant to claim No. |
| PX | CN 119514436 A (HYGON INFORMATION TECHNOLOGY CO., LTD.) 25 February 2025 (2025-02-25) claims 1-16 | 1-16 |
| A | US 2023306180 A1 (SYNOPSYS, INC.) 28 September 2023 (2023-09-28) description, paragraphs 20-82, and figures 1-8 | 1-16 |
| A | CN 111967212 A (UNICMICRO (GUANGZHOU) CO., LTD.) 20 November 2020 (2020-11-20) entire document | 1-16 |
| A | CN 117787202 A (SHANGHAI JIAO TONG UNIVERSITY) 29 March 2024 (2024-03-29) entire document | 1-16 |
| A | US 2009217226 A1 (CUI, Qian et al.) 27 August 2009 (2009-08-27) entire document | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 September 2025** | **12 September 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2025/100803**

| Patent document cited in search report | | | Publication date (day/month/year) | Patent family member(s) | | | Publication date (day/month/year) |
|---|---|---|---|---|---|---|---|
| CN | 119514436 | A | 25 February 2025 | None | | | |
| US | 2023306180 | A1 | 28 September 2023 | EP | 4466628 | A1 | 27 November 2024 |
| | | | | WO | 2023183134 | A1 | 28 September 2023 |
| | | | | TW | 202347161 | A | 01 December 2023 |
| | | | | KR | 20240163068 | A | 18 November 2024 |
| | | | | CN | 118475935 | A | 09 August 2024 |
| CN | 111967212 | A | 20 November 2020 | None | | | |
| CN | 117787202 | A | 29 March 2024 | None | | | |
| US | 2009217226 | A1 | 27 August 2009 | None | | | |

Form PCT/ISA/210 (patent family annex) (July 2022)

**EP 4 769 202 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411615169